# EUROPÄISCHE PATENTANMELDUNG

(11) **EP 2 644 932 A1**
(43) Veröffentlichungstag der Anmeldung: **02.10.2013**
(21) Anmeldenummer: 12162365.6
(22) Anmeldetag: 30.03.2012
(51) Int. Cl.: F16F 9/02, F16F 9/06, F16F 9/56

(54) **Spanneinrichtung**

(71) Anmelder: Hemscheidt Fahrwerktechnik GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(57) **Zusammenfassung**

Die vorliegende Erfindung betrifft eine Spanneinrichtung (1) zum Beaufschlagen eines zu spannenden Bauteils (2), wie einer Andruck- oder Umlenkrolle, mit einer Spannkraft (F_{X}), mit einem zur Einstellung der Spannkraft (F_{X}) zwischen einem mit dem Bauteil (2) zu verbindenden Verbindungselement (10) und einem Widerlager (12) längenverstellbaren Spannelement (8). Das Widerlager (12) ist über ein pneumatisches Federelement (14) federelastisch nachgiebig gegen ein ortsfest befestigbares Anschlusselement (16) abgestützt, wobei das pneumatische Federelement (14) für eine Stützkraft (F_{Y}) ausgelegt ist, die größer/gleich der Spannkraft (F_{X}) ist.

## Beschreibung

Die vorliegende Erfindung betrifft gemäß dem Oberbegriff des unabhängigen Anspruchs 1 eine Spanneinrichtung zum Beaufschlagen eines zu spannenden Bauteils, wie einer Andruck- oder Umlenkrolle, mit einer Spannkraft, mit einem zur Einstellung der Spannkraft zwischen einem mit dem Bauteil zu verbindenden Verbindungselement und einem Widerlager längenverstellbaren Spannelement.

Derartige Spanneinrichtungen sind in der Technik für zahlreiche Anwendungen bekannt. Beispielsweise wirkt das längenverstellbare Spannelement über sein endseitiges Verbindungselement und einen Hebelarm gegen eine Andruckrolle oder -walze, die dadurch mit der Spannkraft gegen eine Gegenrolle oder -walze gepresst wird. Ferner kann auch eine Umlenkrolle eines umlaufenden Treibmittels, wie einer Kette, eines Riemens oder eines Förderbandes, mit einer Spannkraft beaufschlagt werden. Im praktischen Einsatz können Störungen auftreten. So kann es durch Fremdkörper im Bereich des zu spannenden Bauteils zu einem plötzlichen Anstieg der Spannkraft bis hin zu einem Blockieren des Bauteils kommen. In schlimmen Fällen können durch solche Überlastungen gravierende Schäden auftreten.

Der vorliegenden Erfindung liegt die Aufgabe zu Grunde, eine Spanneinrichtung der beschriebenen, gattungsgemäßen Art so zu verbessern, dass ein Schutz gegen Überlastungen derart erreicht wird, dass Beschädigungen und Totalausfälle vermieden werden.

Erfindungsgemäß wird dies mit einer Spanneinrichtung gemäß dem unabhängigen Anspruch 1 erreicht. Vorteilhafte Ausgestaltungen der Erfindung sind in den abhängigen Ansprüchen sowie in der anschließenden Beschreibung enthalten.

Demnach ist erfindungsgemäß vorgesehen, dass das Widerlager über ein pneumatisches Federelement federelastisch nachgiebig gegen ein ortsfest befestigbares Anschlusselement abgestützt ist, wobei das pneumatische Federelement für eine Stützkraft ausgelegt ist, die größer/gleich der Spannkraft ist. Hierbei befindet sich das Widerlager im normalen Betriebszustand durch die Stützkraft und gegen die Spannkraft in einer Anschlagstellung, wobei durch einen Anstieg der Spannkraft zumindest auf den Wert der Stützkraft, der vorzugsweise um eine bestimmte Differenzkraft größer als die Spannkraft ist, das Spannelement mit dem Widerlager unter Komprimierung des pneumatischen Federelementes in Richtung des Anschlusselementes bewegt wird. Somit kann das Spannelement in einem oben beispielhaft beschriebenen Störfall vorteilhafterweise über das nachgiebige Widerlager eine Sicherheits-Ausweichbewegung ausführen. Wenn nachfolgend die Störungsursache beseitigt ist, sorgt das pneumatische Federelement durch seine Stützkraft selbsttätig für eine Rückbewegung des Spannelementes in seine normale Betriebsstellung. Auf diese Weise werden bleibende Schäden mit hoher Sicherheit vermieden. Die Abstützung des Widerlagers über das pneumatische Federelement ist mit dem Vorteil einer geringen Baugröße im Vergleich zu mechanischen Federelementen verbunden. So kann das pneumatische Federelement bei kurzer Baulänge für eine flache Federkennlinie, aber dennoch für eine hinreichend große Stützkraft ausgelegt werden.

In einer bevorzugten Ausführungsform der Erfindung ist die Spanneinrichtung als eine kompakte lineare Zylinderkolbeneinheit ausgebildet, die aus einem Zylindergehäuse und einer einendig teleskopisch verschiebbar geführten, an ihrem freien äußeren Ende das Verbindungselement aufweisenden Kolbenstange besteht. Hierbei weist das Zylindergehäuse an seinem anderen, der Kolbenstange gegenüberliegenden, geschlossenen Zylinderende das ortsfest befestigbare Anschlusselement auf. Innerhalb des Zylindergehäuses ist zwischen der verschiebbaren Kolbenstange und dem geschlossenen Zylinderende das pneumatische Federelement integriert angeordnet. In weiterer bevorzugter Ausgestaltung ist das pneumatische Federelement als Kolben-Druckfederspeicher ausgebildet. Dazu ist innerhalb des Zylindergehäuses ein das Widerlager bildender Druckkolben verschiebbar geführt, wobei in einer zwischen dem Druckkolben und dem geschlossenen Zylinderende gebildeten Federkammer ein Druckgas, insbesondere Stickstoff, mit einem bestimmten Gasdruck enthalten ist, der den Druckkolben mit der Stützkraft in Richtung der Kolbenstange gegen einen inneren gehäuseseitigen Anschlag drängt. Hierbei kann sich die Kolbenstange direkt mechanisch oder aber mittelbar über ein inkompressibles oder kompressibles Füllmedium an dem das Widerlager bildenden Druckkolben abstützen. Für die Einstellung der Länge des Spannelementes bzw. der freien Überstandslänge der Kolbenstange zwecks Einstellung der Spannkraft gibt es verschiedene Möglichkeiten, die in der anschließenden Beschreibung noch genauer erläutert werden sollen. Im einfachsten Fall kann es sich um eine Ausführung nach Art einer mechanischen Schraubspindel handeln. In den bevorzugten Ausführungen wird aber die Länge hydraulisch oder pneumatisch durch Zuführen bzw. Ablassen eines Füllmediums eingestellt.

Anhand der angefügten Zeichnungen soll im Folgenden die Erfindung beispielhaft genauer erläutert werden. Dabei zeigen:
- Fig. 1: eine vereinfachte Seitenansicht einer erfindungsgemäßen Spanneinrichtung in einem Anwendungsbeispiel zur Spannkraft-Beaufschlagung einer Andruckrolle,
- Fig. 2: eine Ansicht wie in Fig. 1 beispielhaft zur Spannkraft-Beaufschlagung einer Umlenkrolle eines umlaufenden Treibmittels,
- Fig. 3: eine Längsschnittdarstellung der erfindungsgemäßen Spanneinrichtung in einer ersten Ausführungsform,
- Fig. 4: eine zweite Ausführungsform der Spanneinrichtung im Längsschnitt analog zu Fig. 3,
- Fig. 5: eine Ausführungsvariante zu Fig. 4,
- Fig. 6: eine weitere Ausführungsform der Spanneinrichtung im Längsschnitt,
- Fig. 7: ein Weg-Kraft-Diagramm zur Erläuterung der Wirkungsweise der erfindungsgemäßen Spanneinrichtung und
- Fig. 8: ein weiteres Weg-Kraft-Diagramm zu einer alternativen Ausführung der Spanneinrichtung.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

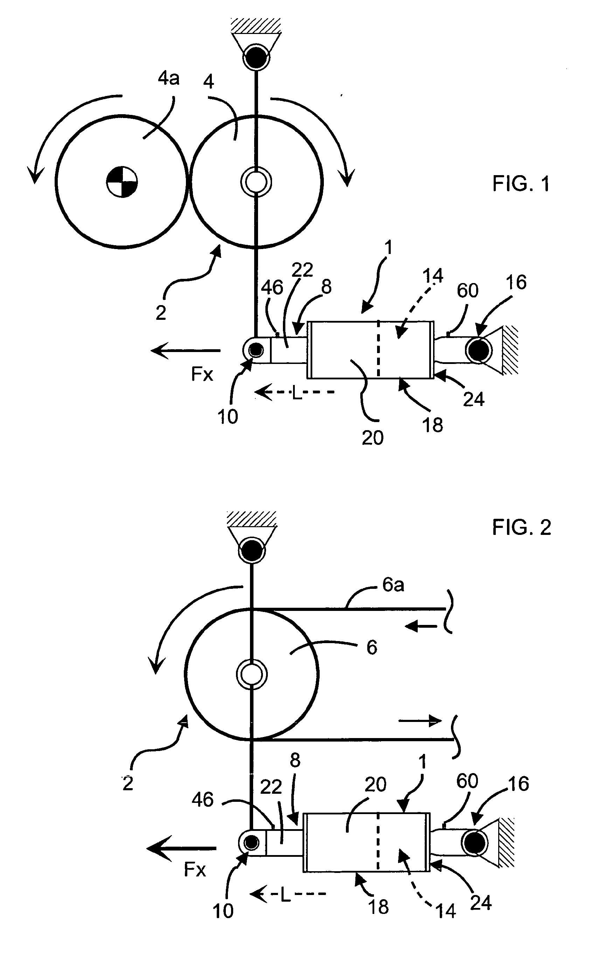

Wie sich zunächst aus Fig. 1 und 2 ergibt, dient eine erfindungsgemäße Spanneinrichtung 1 zum Beaufschlagen eines zu spannenden Bauteils 2 mit einer Spannkraft F_{X}. Gemäß Fig. 1 kann es sich bei dem zu spannenden Bauteil 2 beispielsweise um eine Andruckrolle 4 handeln, die mit der Spannkraft F_{X} gegen eine Gegenrolle 4a gepresst wird. In dem Anwendungsbeispiel gemäß Fig. 2 ist das Bauteil 2 als Umlenkrolle 6 eines umlaufenden Treibmittels 6a ausgebildet, wobei durch die Spannkraft F_{X} das Treibmittel 6a gespannt wird.

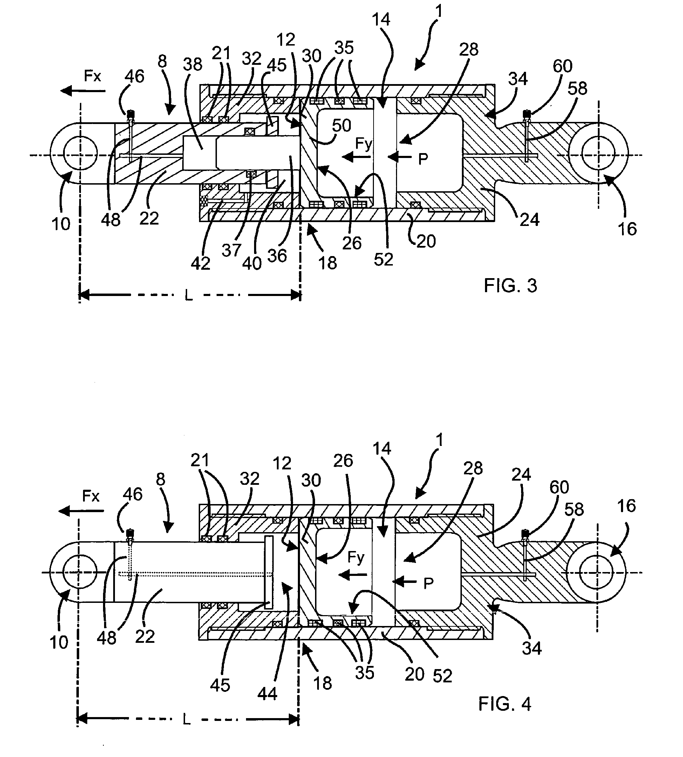

Zur Erzeugung der Spannkraft F_{X} weist die Spanneinrichtung 1 ein Spannelement 8 auf, dessen Länge L zwischen einem mit dem Bauteil 2 zu verbindenden, endseitigen Verbindungselement 10 und einem Widerlager 12 - vergleiche dazu die Schnittansichten in Fig. 3 bis 6 - verstellbar ist. Gemäß Fig. 1 und 2 wird durch Vergrößerung der Länge L über das Verbindungselement 10 das jeweilige Bauteil 2 gespannt, bis die gewünschte Spannkraft F_{X} erreicht ist.

Erfindungsgemäß ist nun vorgesehen, dass das Widerlager 12 über ein pneumatisches Federelement 14 federelastisch nachgiebig gegen ein ortsfest befestigbares Anschlusselement 16 abgestützt ist. Das pneumatische Federelement 14 ist hierbei für eine Stützkraft F_{Y} ausgelegt, die größer/gleich der Spannkraft F_{X} ist.

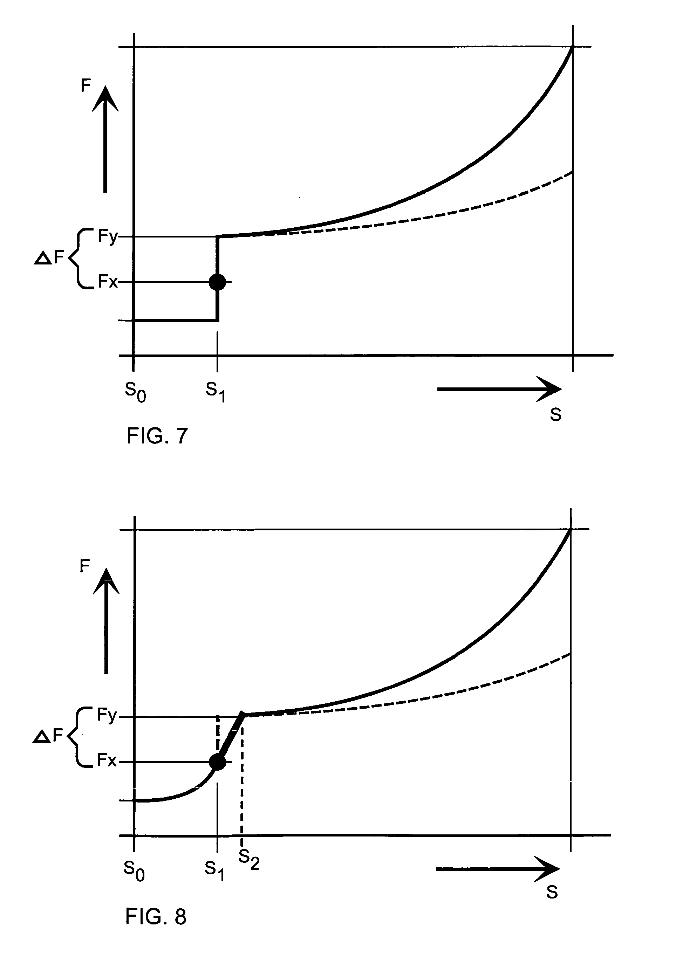

Durch die Auslegung der genannten Kräfte befindet sich das Widerlager 12 im Normalbetrieb aufgrund der Stützkraft F_{Y} in einer Anschlagstellung, wobei durch einen Anstieg der Spannkraft F_{X} zumindest auf den Wert der Stützkraft F_{Y}, der bevorzugt um eine bestimmte Differenzkraft ΔF größer als die Spannkraft F_{X} ist, das Spannelement 8 mit dem Widerlager 12 unter Komprimierung des pneumatischen Federelementes 14 in Richtung des Anschlusselementes 16 bewegt wird. Hierzu wird auch auf die Diagramme in Fig. 7 und 8 verwiesen. Vorzugsweise ist die erfindungsgemäße Spanneinrichtung 1 so ausgelegt, dass die Differenzkraft ΔF etwa 20 % der Spannkraft F_{X} beträgt, so dass die Stützkraft F_{Y} etwa dem 1,2-fachen der Spannkraft F_{X} entspricht.

In konstruktiver Hinsicht ist es vorteilhaft, wenn die Spanneinrichtung 1 als kompakte lineare Zylinderkolbeneinheit 18 ausgebildet ist. Wie sich aus den Fig. 3 bis 6 ergibt, weist die Zylinderkolbeneinheit 18 ein Zylindergehäuse 20 und eine einendig teleskopisch verschiebbar und über Dichtungen 21 umfangsgemäß abgedichtet nach außen geführte Kolbenstange 22 auf. Die Kolbenstange 22 weist an ihrem freien, äußeren Ende das Verbindungselement 10 auf und bildet damit den wesentlichen Teil des Spannelementes 8. Das Zylindergehäuse 20 weist an seinem anderen, der Kolbenstange 22 gegenüberliegenden, geschlossenen Zylinderende 24 das ortsfest befestigbare Anschlusselement 16 auf. Innerhalb des Zylindergehäuses 20 ist zwischen der verschiebbaren Kolbenstange 22 und dem geschlossenen Zylinderende 24 das pneumatische Federelement 14 integriert angeordnet. Dazu ist innerhalb des Zylindergehäuses 20 ein das Widerlager 12 bildender Druckkolben 26 geführt, und in einer zwischen dem Druckkolben 26 und dem geschlossenen Zylinderende 24 gebildeten Federkammer 28 ist ein Druckgas, insbesondere Stickstoff, mit einem bestimmten Gasdruck p enthalten. Dieser Gasdruck p beaufschlagt die wirksame Druckfläche des Druckkolbens 26, wodurch nach der Beziehung F = p · A (Kraft F gleich Druck p mal vom Druck beaufschlagte Fläche A) die Stützkraft F_{Y} erzeugt wird, mit der der Druckkolben 26 als Widerlager in Richtung der Kolbenstange 22 gegen einen inneren gehäuseseitigen Anschlag 30 gedrängt wird. Der Anschlag 30 kann von einer Ringfläche eines in das Zylindergehäuse 20 eingeschraubten Zylinderdeckels 32 gebildet sein. Entsprechend kann auch das geschlossene Zylinderende 24 von einem eingeschraubten Verschlussstück 34 gebildet sein, welches das Anschlusselement 16 aufweist. Der Druckkolben 26 weist Kolbendichtungen 35 zur druckdichten Abdichtung des Ringspaltes zwischen dem Druckkolben 26 und der Innenfläche des Zylindergehäuses 20 auf.

Die Kolbenstange 22 stützt sich in allen Ausführungen innerhalb des Zylindergehäuses 20 an dem das Widerlager 12 bildenden Druckkolben 26 ab. Für diese Abstützung gibt es unterschiedliche Möglichkeiten.

Bei der ersten Ausführung gemäß Fig. 3 stützt sich die Kolbenstange 22 über ein Anlageelement 36 mechanisch an dem Druckkolben 26 ab. Hierbei ist zur Einstellung der Länge L vorgesehen, dass das Anlageelement 36 kolbenartig und teleskopisch verschiebbar und über mindestens eine Umfangsdichtung 37 abgedichtet in einem axialen Kolbenstangenraum 38 geführt ist, wobei zur Einstellung der Länge L - und damit der Spannkraft F_{X}- der Kolbenstangenraum 38 durch Zuführen bzw. Ablassen eines insbesondere inkompressiblen hydraulischen Füllmediums, wie Öl oder Fett, längenvariabel ist. Dies bedeutet, dass durch Zuführen eines bestimmten Volumens des Füllmediums in den Kolbenstangenraum 38 die Länge L vergrößert werden kann, während durch Ablassen eines bestimmten Volumens des Füllmediums die Länge L reduziert wird. Über das jeweils in dem Kolbenstangenraum 38 eingeschlossene Volumen des bevorzugt inkompressiblen Füllmediums stützt sich dann die Kolbenstange 22 grundsätzlich starr an dem das Widerlager 30 bildenden Druckkolben 26 ab. Bei dieser Ausführung ist ein das innere Ende der Kolbenstange 22 und das Anlageelement 36 aufnehmender Zylinderraum 40 über mindestens eine Lüftungsöffnung 42 belüftet und dadurch mit der Außenatmosphäre verbunden.

Bei den anderen, in den Fig. 4 bis 6 dargestellten Ausführungsformen ist vorgesehen, dass die Kolbenstange 22 mit ihrem inneren, dem Verbindungselement 10 gegenüberliegenden Ende nach Art eines Tauchkolbens, häufig auch Plunger genannt, in einen von dem Druckkolben 26 begrenzten Zylinderraum 44 eintaucht. Hierbei ist zur Einstellung der Länge L des Spannelementes 8 und damit der Spannkraft F_{X} vorgesehen, dass die axiale Lage, d. h. die Ausschublänge, der Kolbenstange 22 relativ zu dem Zylindergehäuse 20 durch Zuführen bzw. Ablassen eines Füllmediums in den bzw. aus dem Zylinderraum 44 veränderbar ist. Hierbei stützt sich folglich die Kolbenstange 22 mittelbar über das jeweilige Füllmedium an dem das Widerlager 12 bildenden Druckkolben 26 ab. An ihrem inneren Ende weist die Kolbenstange 22 mindestens einen radialen, z. B. ringstegförmigen Fortsatz 45 als Endanschlag in Ausschubrichtung auf.

Bei diesen Ausführungen kann als Füllmedium ein inkompressibles, hydraulisches Medium, wie Öl oder Fett, verwendet werden. Dadurch wird eine praktisch starre, unnachgiebige Abstützung der Kolbenstange 22 an dem das Widerlager 12 bildenden Druckkolben 26 erreicht. Hierzu wird auf das Diagramm in Fig. 7 verwiesen. Daraus wird deutlich, dass zunächst die Spannkraft F_{X} eingestellt wird, indem ausgehend von einer bestimmten Nulllage s₀ Füllmedium in den Zylinderraum 44 eingeführt wird. Dadurch verschiebt sich die Kolbenstange 22 nach außen in eine Betriebsstellung s₁. Die Kraft steigt dann im Wesentlichen ohne Wegänderung auf den gewünschten Wert F_{X} an. Tritt dann ein oben beschriebener Störfall auf, so steigt die Kraft zunächst ohne Wegänderung auf den Wert F_{Y} an, und ab dieser Kraft wird dann der das Widerlager 12 bildende Druckkolben 26 von der Kolbenstange 22 über das Füllmedium verschoben. Das gesamte Spannelement 8 führt somit eine Ausweichbewegung gegen die elastische Federkraft des pneumatischen Federelementes 14 aus. In Fig. 7 sind beispielhaft zwei verschiedene Federkennlinien veranschaulicht, wobei eine steilere, obere Kennlinie bei relativ geringerem Volumen der Federkammer 28 vorliegt, während durch Vergrößerung des Volumens der Federkammer 28 die Kennlinie flacher wird, wie dies anhand der unteren, gestrichelt gezeichneten Kennlinie veranschaulicht ist. Angestrebt wird eine möglichst flache Kennlinie.

In einer alternativen Ausführungsform kann das Füllmedium im Zylinderraum 44 auch ein Gas, wie insbesondere Stickstoff, mit einem bestimmten pneumatischen Vorspanndruck sein. Hierzu wird auf das Diagramm in Fig. 8 verwiesen, wonach die Einstellung des Spanndrucks F_{X} sanfter gemäß der zwischen s₀ und s₁ eingezeichneten Kurve erfolgt. Diese Kurve setzt sich auch in einem Störfall ausgehend von der Spannkraft F_{X} fort, bis in einer Stellung s₂ die Stützkraft F_{Y} erreicht wird. Es schließt sich dann die oben bereits beschriebene Ausweichbewegung des Spannelementes 8 durch Verschiebung des das Widerlager 12 bildenden Druckkolbens 26 an.

In allen dargestellten Ausführungsformen gemäß Fig. 3 bis 6 weist die Kolbenstange 22 einen Anschluss 46 und einen Kanal 48 zum Zuführen bzw. Ablassen des jeweiligen Füllmediums auf. Bei der Ausführung gemäß Fig. 3 mündet der Kanal 48 axial in den inneren Kolbenstangenraum 38, während bei den anderen Ausführungen gemäß Fig. 4 bis 6 der Kanal 48 axial in den Zylinderraum 44 mündet.

Auch für die konstruktive Ausgestaltung des Druckkolbens 26 sind unterschiedliche Ausführungsformen möglich. Gemäß Fig. 3 bis 5 ist der Druckkolben 26 topfförmig mit einem Kolbenboden 50 und einer gegenüberliegenden Kolbenvertiefung 52 ausgebildet. Gemäß Fig. 3 und Fig. 4 kann hierbei der Druckkolben 26 mit seinem Kolbenboden 50 der Kolbenstange 22 zugewandt sein, wobei die Federkammer 28 ein durch die Kolbenvertiefung 52 vergrößertes Volumen aufweist, wodurch gemäß Fig. 7 und 8 eine flachere Federkennlinie erreicht wird.

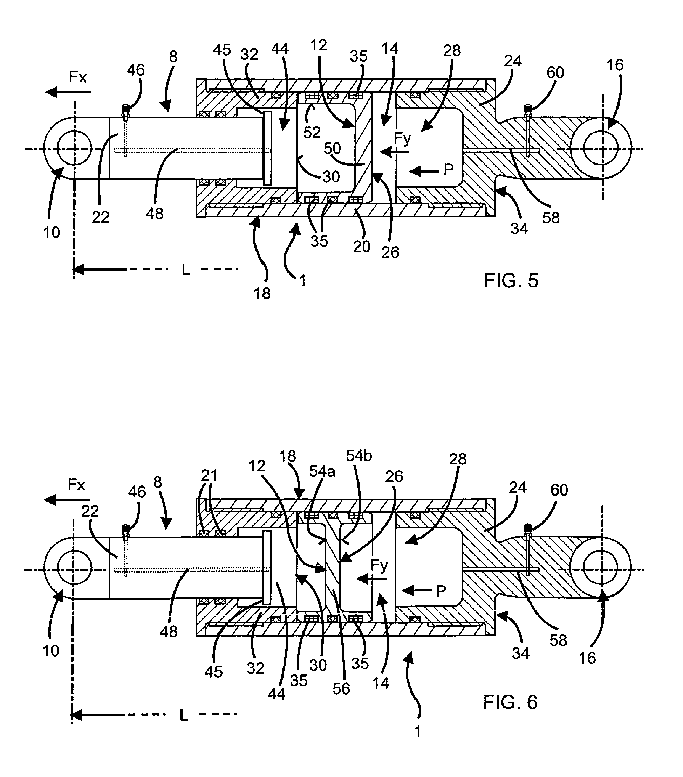

In der in Fig. 5 veranschaulichten Alternative ist der Druckkolben 26 mit seinem Kolbenboden 50 der Federkammer 28 zugewandt, wodurch zwar die Federkammer 28 ein relativ kleineres Volumen für eine steilere Kennlinie hat, jedoch ist hierbei vorteilhaft, dass durch die Kolbenvertiefung 52 ein vergrößerter Bewegungshub der Kolbenstange 22 ermöglicht wird, ohne dass deren inneres Ende mit dem Druckkolben 26 kollidiert.

Bei der weiteren Ausführungsvariante gemäß Fig. 6 handelt es sich bei der Ausgestaltung des Druckkolbens 26 praktisch um einen Kompromiss zwischen den zwei zuvor beschriebenen Ausführungen, indem der Druckkolben 26 doppeltopfförmig mit zwei axial gegenüberliegenden Kolbenvertiefungen 54a und 54b und einem dazwischen liegenden Kolbenboden 56 ausgebildet ist. Durch diese Ausführung wird einerseits ein gegenüber Fig. 3 und 4 vergrößertes Bewegungsspiel der Kolbenstange 22 ermöglicht, und andererseits wird auch eine noch hinreichend flache Federkennlinie erreicht, die in den Diagrammen gemäß Fig. 7 und 8 jeweils zwischen den voll und gestrichelt dargestellten Kennlinien liegt.

Abschließend sei noch erwähnt, dass auch in die Federkammer 28 ein Füllkanal 58 mündet, der von einem Füllventil 60 ausgeht. Der Füllkanal 58 verläuft durch das Zylinder-Verschlussstück 34, und das Füllventil 60 sitzt außen an dem Verschlussstück 34.

Die Erfindung ist nicht auf die dargestellten und beschriebenen Ausführungsbeispiele beschränkt, sondern umfasst auch alle im Sinne der Erfindung gleichwirkenden Ausführungen. So ist zur Längeneinstellung des Spannelementes 8 auch eine mechanische Ausführung z. B. nach Art einer Schraubspindel möglich. Zudem könnte auch bei der Ausführung gemäß Fig. 3 als Füllmittel für den Kolbenstangenraum 38 ein kompressibles, pneumatisches Medium, wie Stickstoff, eingesetzt werden. Zudem wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Spanneinrichtung (1) zum Beaufschlagen eines zu spannenden Bauteils (2), wie einer Andruck- oder Umlenkrolle, mit einer Spannkraft (F_{X}), mit einem zur Einstellung der Spannkraft (F_{X}) zwischen einem mit dem Bauteil (2) zu verbindenden Verbindungselement (10) und einem Widerlager (12) längenverstellbaren Spannelement (8),
**dadurch gekennzeichnet, dass** das Widerlager (12) über ein pneumatisches Federelement (14) federelastisch nachgiebig gegen ein ortsfest befestigbares Anschlusselement (16) abgestützt ist, wobei das pneumatische Federelement (14) für eine Stützkraft (F_{Y}) ausgelegt ist, die größer/gleich der Spannkraft (F_{X}) ist.

2. Spanneinrichtung nach Anspruch 1,
**dadurch gekennzeichnet, dass** sich das Widerlager (12) durch die Stützkraft (F_{Y}) und gegen die Spannkraft (F_{X}) in einer Anschlagstellung befindet, wobei durch einen Anstieg der Spannkraft (F_{X}) zumindest auf den bevorzugt um eine bestimmte Differenzkaft (ΔF) größeren Wert der Stützkraft (F_{Y}) das Spannelement (8) mit dem Widerlager (12) unter Komprimierung des pneumatischen Federelementes (14) in Richtung des Anschlusselementes (16) bewegt wird.

3. Spanneinrichtung nach Anspruch 1 oder 2,
**gekennzeichnet durch** eine Ausgestaltung als lineare Zylinderkolbeneinheit (18) mit einem Zylindergehäuse (20) und einer einendig teleskopisch verschiebbar geführten, an ihrem freien äußeren Ende das Verbindungselement (10) aufweisenden Kolbenstange (22), wobei das Zylindergehäuse (20) an seinem anderen, der Kolbenstange (22) gegenüberliegenden, geschlossenen Zylinderende (24) das ortsfest befestigbare Anschlusselement (16) aufweist, und wobei innerhalb des Zylindergehäuses (20) zwischen der verschiebbaren Kolbenstange (22) und dem geschlossenen Zylinderende (24) das pneumatische Federelement (14) integriert angeordnet ist.

4. Spanneinrichtung nach Anspruch 3,
**dadurch gekennzeichnet, dass** innerhalb des Zylindergehäuses (20) ein das Widerlager (30) bildender Druckkolben (26) geführt ist, wobei in einer zwischen dem Druckkolben (26) und dem geschlossenen Zylinderende (24) gebildeten Federkammer (28) ein Druckgas mit einem bestimmten Gasdruck (p) enthalten ist, der den Druckkolben (26) mit der Stützkraft (F_{Y}) in Richtung der Kolbenstange (22) gegen einen gehäuseseitigen Anschlag (30) drängt.

5. Spanneinrichtung nach Anspruch 4,
**dadurch gekennzeichnet, dass** die Kolbenstange (22) über ein Anlageelement (36) mechanisch an dem das Widerlager (30) bildenden Druckkolben (26) abgestützt ist, wobei das Anlageelement (36) kolbenartig und teleskopisch verschiebbar in einem axialen Kolbenstangenraum (38) geführt ist, wobei zur Einstellung der Länge (L) des Spannelementes (8) und damit der Spannkraft (F_{X}) der Kolbenstangenraum (38) durch Zuführen bzw. Ablassen eines insbesondere inkompressiblen hydraulischen Füllmediums, wie Öl oder Fett, längenvariabel ist.

6. Spanneinrichtung nach Anspruch 5,
**dadurch gekennzeichnet, dass** ein das innere Ende der Kolbenstange (22) und das Anlageelement (36) aufnehmender Zylinderraum (40) über mindestens eine Lüftungsöffnung (42) belüftet ist.

7. Spanneinrichtung nach Anspruch 4,
**dadurch gekennzeichnet, dass** die Kolbenstange (22) mit ihrem inneren Ende nach Art eines Tauchkolbens in einen von dem Druckkolben (26) begrenzten Zylinderraum (44) eintaucht, wobei zur Einstellung der Länge (L) des Spannelementes (8) und damit der Spannkraft (F_{X}) die axiale Lage der Kolbenstange (22) relativ zu dem Zylindergehäuse (20) durch Zuführen bzw. Ablassen eines Füllmediums veränderbar ist.

8. Spanneinrichtung nach Anspruch 7,
**dadurch gekennzeichnet, dass** das Füllmedium ein hydraulisches, inkompressibles Medium, wie Öl oder Fett, ist.

9. Spanneinrichtung nach Anspruch 7,
**dadurch gekennzeichnet, dass** das Füllmedium ein Gas mit einem bestimmten pneumatischen Vorspanndruck ist.

10. Spanneinrichtung nach einem der Ansprüche 5 bis 9,
**dadurch gekennzeichnet, dass** die Kolbenstange (22) einen Anschluss (46) und einen Kanal (48) zum Zuführen bzw. Ablassen des jeweiligen Füllmediums aufweist.

11. Spanneinrichtung nach einem der Ansprüche 4 bis 10,
**dadurch gekennzeichnet, dass** der Druckkolben (26) topfförmig mit einem Kolbenboden (50) und einer gegenüberliegenden Kolbenvertiefung (52) ausgebildet ist.

12. Spanneinrichtung nach Anspruch 11,
**dadurch gekennzeichnet, dass** der Druckkolben (26) mit seinem Kolbenboden (50) der Kolbenstange (22) zugewandt ist, wobei die Federkammer (28) ein durch die Kolbenvertiefung (52) vergrößertes Volumen aufweist.

13. Spanneinrichtung nach Anspruch 11,
**dadurch gekennzeichnet, dass** der Druckkolben (26) mit seinem Kolbenboden (50) der Federkammer (28) zugewandt ist, wobei die Kolbenvertiefung (52) einen vergrößerten Bewegungshub der Kolbenstange (22) ermöglicht.

14. Spanneinrichtung nach einem der Ansprüche 4 bis 10,
**dadurch gekennzeichnet, dass** der Druckkolben (26) doppeltopfförmig mit zwei axial gegenüberliegenden Kolbenvertiefungen (54a, b) und einem dazwischen liegenden Kolbenboden (56) ausgebildet ist.

15. Spanneinrichtung nach einem der Ansprüche 4 bis 14,
**dadurch gekennzeichnet, dass** in die Federkammer (28) ein von einem Füllventil (60) ausgehender Füllkanal (58) mündet.
